# EUROPÄISCHE PATENTSCHRIFT

(11) **EP 2 514 293 B1**
(45) Veröffentlichungstag und Bekanntmachung des Hinweises auf die Patenterteilung: **30.09.2015**
(21) Anmeldenummer: 12002431.0
(22) Anmeldetag: 04.04.2012
(51) Int. Cl.: A01C 17/00, F16H 59/16, G01L 3/04

(54) **Mechanisches Getriebe mit Drehmomentenmessung**
Mechanical drive with torque measurement
Engrenage mécanique doté d'une mesure de couple

(30) Priorität: 23.04.2011 DE 102011018490
(43) Veröffentlichungstag der Anmeldung: 24.10.2012
(73) Patentinhaber: RAUCH Landmaschinenfabrik GmbH, 76547 Sinzheim (DE)
(72) Erfinder: Linz, Michael, 77815 Bühl (DE); Hadank, Tobias, 01877 Schmölln-Putzkau (DE); Roth, Andreas, 53819 Neunkirchen-Seelscheid (DE); Stöcklin, Volker, 77975 Ringsheim (DE); Gushurst, Hans, 76547 Sinzheim (DE)
(74) Vertreter: Lenz, Steffen

(56) Entgegenhaltungen:
- EP-B1- 0 963 690
- WO-A1-2011/032293
- DE-A1- 10 160 760
- US-A- 4 450 729
- US-B2- 6 651 519

## Beschreibung

Die Erfindung betrifft ein Mechanisches Getriebe mit einem Antrieb und einem Abtrieb, die über eine Welle miteinander verbunden sind, und mit einer Einrichtung zur Messung des Drehmoments an der Welle, die jeweils drehfest mit der Welle verbundene Inkrementalgeber und in deren Umlaufbereich ortsfest angeordnete Impulsaufnehmer zur Messung des Torsionswinkels aufweist.

Die Erfindung ist insbesondere auf mechanische Getriebe für Zweischeiben-Düngerstreuer gerichtet, die große Vorteile hinsichtlich einfacher Bedienung, hoher Leistungsfähigkeit und günstiger Anschaffungskosten aufweisen.

Bei Getrieben der eingangs genannten Art ist neben der abtriebsseitigen Drehzahl auch das an der Abtriebsseite abgegebene Drehmoment von Bedeutung. Es ist deshalb in vielen Fällen eine Drehmomentmessung erwünscht. Diese erfolgt über die Messung des Torsionswinkels der Welle zwischen Antriebs- und Abtriebsseite.

Für eine mechanische Drehmomentmessung an einem drehenden Bauteil, z.B. der Antriebswelle eines Getriebes, wird diese mit Dehnungsmessstreifen bestückt. Aufgrund der elektrischen Signalübertragung mittels Schleifringen ist dieses System für einen robusten Einsatz, z.B. an Landmaschinen ungeeignet.

Bei einem Düngerstreuer ist der Düngermassenstrom eine wichtige Regelgröße. Es ist die Düngermasse, die pro Zeiteinheit von den Verteilscheiben des Streuers abgegeben wird. Sie kann für beide Verteilerscheiben unterschiedlich sein, beispielsweise bei unterschiedlicher Streubreite auf beiden Seiten. Der Düngermassenstrom lässt sich über das jeweils an der Verteilerscheibe wirkende Drehmoment ermitteln.

Es ist - auch für Düngerstreuer - bekannt (DE 101 54 437), zur Vergrößerung des Torsionswinkels die Getriebewelle im Durchmesser zu reduzieren und eine Überlastsicherung in Form eines Tragrohres vorzusehen. Insbesondere beim Einschalten des Antriebs entstehen hohe Anlauf-Drehmomente, die den verschlankten Abschnitt der Welle ins Schwingen bringen. Mit diesem System lassen sich deshalb kleine Düngermassenströme nicht ausreichend genau erfassen, weil die Sensoren aufgrund der Schwingung der verschlankten Welle nur ungenaue Drehmomentsignale liefern können.

Die EP 0 963 690 B1 beschreibt in einer Alternative einen hydraulischen Einzelantrieb für jede Verteilerscheibe eines Zweischeiben-Düngerstreuers. Der Massenstrom wird dadurch ermittelt, dass Sensoren den Druckabfall über dem Hydromotor erfassen und als Ausgangsgröße für das Drehmoment an einen Rechner liefern. Dieses System hat sich bei hydraulischen Antrieben bewährt. Hydraulische Antriebe sind jedoch kostenaufwendig, so dass nach wie vor mechanisch angetriebene Düngerstreuer einen hohen Marktanteil einnehmen.

Für solche Düngerstreuer schlägt die EP 0 963 690 B1 in einer zweiten Alternative die eingangs genannte Einrichtung zur Drehmomentmessung vor. Das mechanische Getriebe wird über einen mittigen Antrieb von der Zapfwelle des Traktors angetrieben. Der Antrieb weist ein Kegelrad-Eckgetriebe auf und treibt eine Querwelle, die über je an gegenüberliegenden Enden angeordnete Kegelräder auf den Abtrieb und die dort angeordneten Verteilerscheiben wirkt. Auf der Querwelle sind zwischen Antrieb und Abtrieb und mit Abstand voneinander Inkrementalgeber drehfest angeordnet, die mit Impulsaufnehmern zusammenwirken. Die Impulsaufnehmer sind an einem durchgehenden Gehäuserohr angeordnet. Aufgrund der Distanz der beiden Inkrementalgeber wirkt sich die Torsionsbeanspruchung der Welle in einer Phasenverschiebung der von den Impulsaufnehmern registrierten Impulse aus. Im Leerlauf, d.h. ohne Beaufschlagung der Verteilerscheiben, ergibt sich hieraus ein Maß für das Leerlaufdrehmoment. Bei Beaufschlagung einer Verteilerscheibe mit dem Sollmassenstrom ergibt sich an den Impulsaufnehmern eine Phasenverschiebung, die ein Maß für das Gesamtdrehmoment ist, aus dem sich durch Abzug des Leerlaufmoments das Ist-Massenstrom-Drehmoment ermitteln lässt.

Die bekannte mechanische Lösung hat den Nachteil, dass die Inkrementalgeber einen nur relativ kurzen Einbauabstand aufweisen. Auf der entsprechend kurzen Länge ist der Torsionswinkel der Welle entsprechend klein. Das führt zu ungenauen Messergebnissen. Weiterhin ist von Nachteil, dass sich bei durchbiegender Welle der Abstand zwischen Geber und Impulsaufnehmer ändert. Dies führt zu fehlerhaften Meseergebnissen, zudem kann sich das Gehäuserohr durchbiegen und verwinden, worunter wiederum die Messgenauigkeit leidet, weil der Abstand vom Inkrementalgeber und Impulsaufnehmer nicht konstant bleibt.

Der Erfindung liegt die Aufgabe zugrunde, an Antriebswellen von mechanischen Antrieben, z.B. Getrieben, eine preiswerte berührungslose Erfassung von niedrigen und hohen Drehmomenten in hoher Präzision vorzuschlagen. Bei Zweischeiben-Düngerstreuern betrifft diese Anforderung niedrige und hohe Verdrehungen der Antriebswelle bei verschiedenen Düngermassenströmen.

Die Erfindungsaufgabe wird bei einem mechanischen Getriebe der eingangs genannten Art dadurch gelöst, dass jeder Inkrementalgeber in einer mit dem Getriebegehäuse fest verbundenen Konsole mittels einer Übertragungshülse gelagert ist, die an ihrem einen Ende auf der Welle drehfest aufgespannt ist, die Welle im Übrigen mit Luft umgibt und an ihrem anderen Ende jeweils einen Inkrementalgeber aufnimmt und in der mit dem Getriebegehäuse fest verbundenen Konsole axialfest gelagert ist. Durch die erfindungsgemäße Ausbildung ist stets ein konstanter Abstand zwischen Inkrementalgeber und Impulsaufnehmer gewährleistet. Es wird nur die Tordierung der Welle erfasst, auch wenn diese sich durchbiegt.

In bevorzugter Ausführung ist vorgesehen, dass jeweils ein Inkrementalgeber nahe dem Antrieb und einer nahe dem Abtrieb auf der Welle drehfest angeordnet ist.

Durch den gleichsam größtmöglichen Abstand von Inkrementalgeber/Impulsaufnehmer voneinander wird ein größtmöglicher Torsionswinkel der Welle aufgenommen, was zu größtmöglicher Genauigkeit führt. Durch die Lagerung der Inkrementalgeber in Konsolen des Gehäuses kann die Welle sich durchbiegen, dennoch ist ein konstanter Abstand zwischen Inkrementalgeber und Impulsaufnehmer gewährleistet. Es wird nur die Winkelverdrehung der Welle erfasst.

In einem Ausführungsbeispiel ist vorgesehen, dass die Welle gegenüber dem Inkrementalgeber begrenzt axial beweglich, dieser gleichwohl drehfest mit ihr verbunden ist. Diese Ausbildung lässt eine Längsbewegung der Welle zu, ohne Beeinflussung des Abstandes Inkrementalgeber/Impulsaufnehmer.

In einer Ausgestaltung der Erfindung ist vorgesehen, dass ein Inkrementalgeber auf der Welle antriebsseitig und ein weiterer Inkrementalgeber auf der Welle abtriebsseitig drehfest auf der Welle angeordnet ist, und die Inkrementalgeber jeweils in Konsolen gelagert sind, die mit dem Getriebegehäuse fest verbunden sind und dass die zugehörigen Impulsaufnehmer jeweils am Gehäuse oder in Gehäuseflanschen angeordnet sind. Hierdurch ergibt sich eine funktionssichere und maßgenaue Zuordnung von Inkrementalgeber und Impulsaufnehmer bei größtmöglicher Messgröße für den Torsionswinkel.

Eine Ausführungsform der Erfindung zeichnet sich dadurch aus, dass ein Inkrementalgeber auf der Welle antriebsseitig und ein weiterer Inkrementalgeber auf der Welle abtriebsseitig drehfest auf der Welle angeordnet ist, und die Inkrementalgeber jeweils in Konsolen gelagert sind, die mit dem Getriebegehäuse fest verbunden sind und dass die zugehörigen Impulsaufnehmer jeweils am Getriebegehäuse oder in Gehäuseflanschen angeordnet sind.

Auch auf diese Weise wird der größtmögliche Torsionswinkel genutzt.

In einer weiteren Ausführungsform ist vorgesehen, dass bei einem antriebsseitigen Kegelrad-Eckgetriebe und einem abtriebsseitigen Kegelrad-Eckgetriebe ein Inkrementalgeber dicht am antriebsseitigen Kegelrad und ein Inkrementalgeber dicht am abtriebsseitigen Kegelrad drehfest auf der Welle sitzt und die zugehörigen Impulsaufnehmer jeweils am Gehäuse oder in Bauteilen z.B. Flanschen, die mit dem Getriebegehäuse verbunden sind, angeordnet sind. Auch hierbei wird der größtmögliche Torsionswinkel genutzt und ist eine funktionssichere Zuordnung von Inkrementalgeber und Impulsaufnehmer gewährleistet.

Die bevorzugte Ausführungsform der Erfindung zeichnet sich dadurch aus, dass bei einem mittigen antriebsseitigen Kegelrad-Eckgetriebe und zwei an gegenüberliegenden Enden angeordneten abtriebsseitigen Kegelrad-Eckgetrieben mindestens ein Inkrementalgeber jeweils rechts und/oder links nahe dem Kegelrad des Eingangsgetriebes drehfest auf der Welle sitzt und dass jeweils ein weiterer Inkrementalgeber nahe dem rechten und linken Kegelrad drehfest auf der Welle sitzt.

Getriebe dieser Bauart werden insbesondere bei Zweischeiben-Düngerstreuern eingesetzt. Auf jeder Abtriebswelle ist eine Verteilerscheibe montiert. Mit der Anordnung der Inkrementalgeber/Impulsaufnehmer lässt sich der Düngermassenstrom für jede Verteilerscheibe messen und dadurch unterschiedlich einstellen. Durch die Maximierung des Abstandes zwischen den Inkrementalgebern wird die maximale Torsion der Welle erfasst. Es ergibt sich eine kostengünstige Ausführung, da nur drei Inkrementalgeber und Impulsaufnehmer erforderlich sind.

Bei dieser Ausführungsform ist vorgesehen, dass der mindestens eine mittlere Inkrementalgeber und der ihm zugeordnete Impulsaufnehmer das jeweilige Referenzsignal für die außen liegenden Impulsaufnehmer liefern. Diese Maßnahme dient einer präzisen Messung.

Es ist weiterhin vorgesehen, dass der verschieden große Abstand zwischen mindestens einem mittleren Inkrementalgeber/Impulsaufnehmer und den jeweils äußeren Inkrementalgeber/Impulsaufnehmer werksseitig kalibriert und/oder in der Berechnungssoftware kompensiert wird. Auch hier sind als Vorteile die Präzision und Kostensenkung zu nennen.

Die Anordnung des mittleren Impulsaufnehmers ist vorzugsweise in dem Eingangsflansch der Antriebsseite integriert. Hier ergibt sich der Vorteil, dass aufgrund der Steifigkeit des Flanschs kein oder nur ein geringer Versatz/Abstandsänderung gegenüber dem Inkrementalgeber auftritt.

Ferner ist mit Vorteil vorgesehen, dass die Anordnung der äußeren Impulsaufnehmer jeweils in dem die Tragkonsole bildenden Flansch der äußeren Eckgetriebe oder im Getriebegehäuse auf derselben Seite wie der mittlere Getriebeflansch integriert ist. Auch hier entsteht kein oder nur ein geringer Versatz (Abstandänderung) gegenüber dem Inkrementalgeber. Außerdem werden Gleichtaktstörungen vermieden.

Statt der vorgenannten Ausführung können die jeweils äußeren Impulsaufnehmer in den Seitenflanschen des Getriebegehäuses integriert sein. Auch hier ergibt sich kein oder ein nur geringer Versatz (Abstandsänderung) gegenüber den Inkrementalgebern.

Die Übertragungshülse nimmt an der Aufspannfläche die Verdreh-Winkelstellung der Welle auf.

Die Übertragungshülse lässt eine Bewegung der Welle vornehmlich in Achsrichtung zu, ohne dass der Abstand Inkrementalgeber/Impulsaufnehmer beeinflusst wird.

Die Übertragungshülse ist an ihrem der Aufspannfläche auf der Welle gegenüberliegenden freien Ende in einem Kugellager im Getriebegehäuse gelagert.

Dabei kann vorgesehen sein, dass die Spannkraft mittels in die Hülse eingebrachter Schlitze aufbringbar ist.

Die Übertragungshülse kann aus Stahl oder Kunststoff bestehen.

Weitere Einzelheiten und Vorteile der Erfindung ergeben sich aus der nachfolgenden Beschreibung einer in der Zeichnung wiedergegebenen bevorzugten Ausführungsform. In der Zeichnung zeigen:
- Fig. 1: ein mechanisches Getriebe für einen Zweischeiben-Düngerstreuer mit aufgebrochen wiedergegebenen Gehäuse;
- Fig. 2: die mittige Antriebsseite des Getriebes mit einem Kegelrad-Eckgetriebe und
- Fig. 3: die linke Abtriebsseite des Getriebes mit einem Kegelrad-Eckgetriebe, wobei die Darstellung gegenüber Fig.. 2 von 90° um die Achse der Welle gedreht ist.

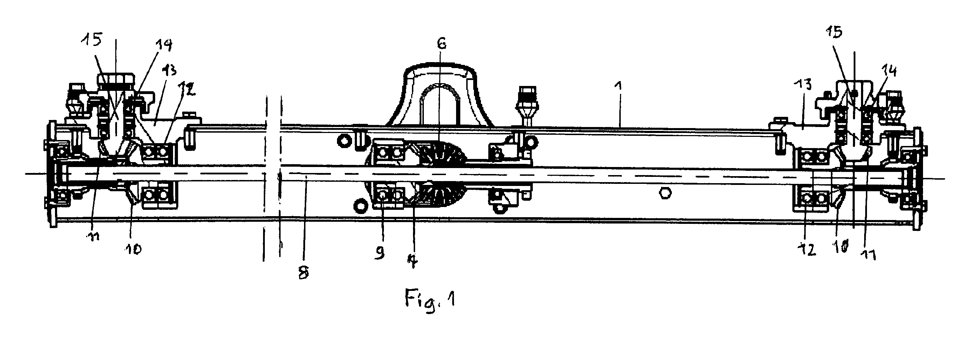

Das Getriebe gemäß Fig. 1 bis 3 eines Zweischeiben-Düngerstreuers weist ein Getriebegehäuse 1 in Form eines Rohres auf. An der mittigen Antriebsseite 2 wird das von der nicht gezeigten Zapfwelle des Traktors auf die Eingangswelle 3, die in Kugellagern 4 des Eingangsflansches 5 gelagert ist, übertragene Drehmoment an ein Kegelrad-Eckgetriebe mit dem antreibenden Kegelrad 6 und dem angetriebenen Kegelrad 7 übertragen. Das Kegelrad 7 sitzt auf einer profilierten Querwelle 8 z.B. einer Sechskantwelle. Das angetriebene Kegelrad 7 ist in Kugellagern 9 gelagert.

Das angetriebene Kegelrad 7 überträgt das Drehmoment über die Querwelle 8 auf je ein abtriebseitiges Kegelrad-Eckgetriebe an gegenüberliegenden Enden des Getriebegehäuses. Das antreibende, auf der Querwelle sitzende Kegelrad 10 ist in Kugellagern 12 im abtriebsseitigen Gehäuseflansch 13 gelagert. Ebenso ist das abtriebsseitige Kegelrad 11 in Kugellagern 14 in dessen Gehäuseflansch 13 gelagert. Die rechte und linke Seite des Getriebes weisen prinzipiell den gleichen Aufbau auf. Das abtriebsseitige Kegelrad 11 treibt eine Abtriebswelle 15 mit einer Nabe, auf der jeweils eine Dünger-Verteilerscheibe montierbar ist.

Auf die Querwelle 8 ist im Bereich der antriebsseitigen Kegelräder 6, 7 und der abtriebsseitigen Kegelräder 10, 11 eine Übertragungshülse 16, 17 bei 18 bzw. 19 aufgespannt, an deren freien Ende der Inkrementalgeber 20 bzw. 21 sitzt. Die Übertragungshülse 16, 17 teilt die Drehbewegung der Querwelle 8 den Inkrementalgebern 20, 21 mit. Sie lässt zugleich am Aufnahmepunkt 18, 19 der Querwelle ein gewisses axiales Spiel. Die Übertragungshülse 16 ist an ihrem dem Aufnahmepunkt 18 fernen Ende in einem Kugellager 24 einer Konsole 23 das Getriebegehäuses und die Übertragungshülse 17 an ihrem dem Aufnahmepunkt 19 fernen Ende in einem Kugellager 26 in einer Konsole 25 im Getriebedeckel 27 axialfest gelagert. Dadurch wird trotz des axialen Spiels der Querwelle 8 eine konstante Zuordnung von Inkrementalgeber und Impulsaufnehmer gewährleistet.

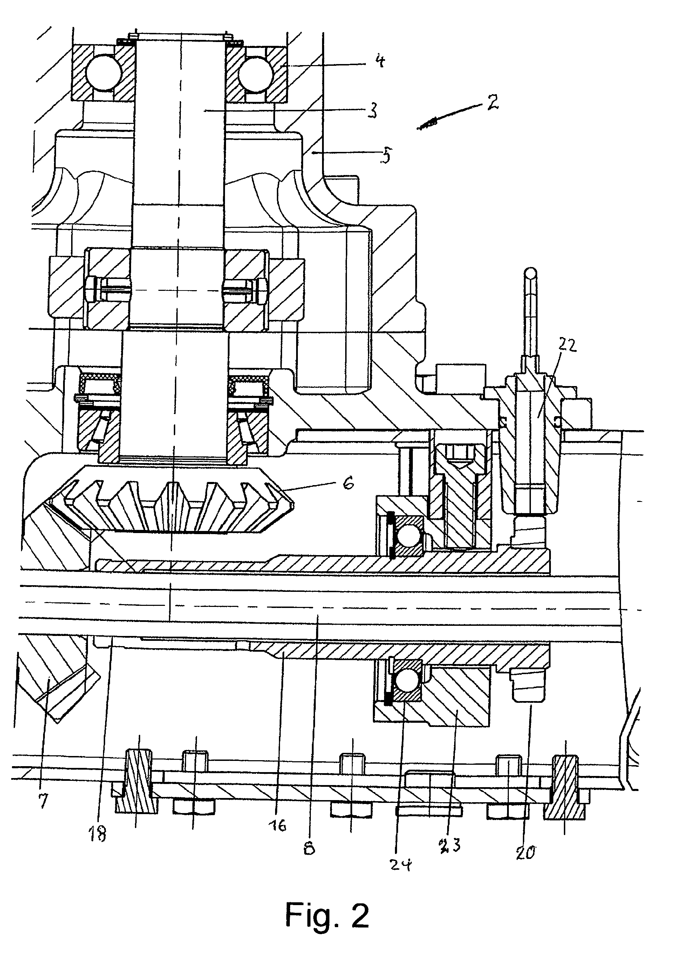

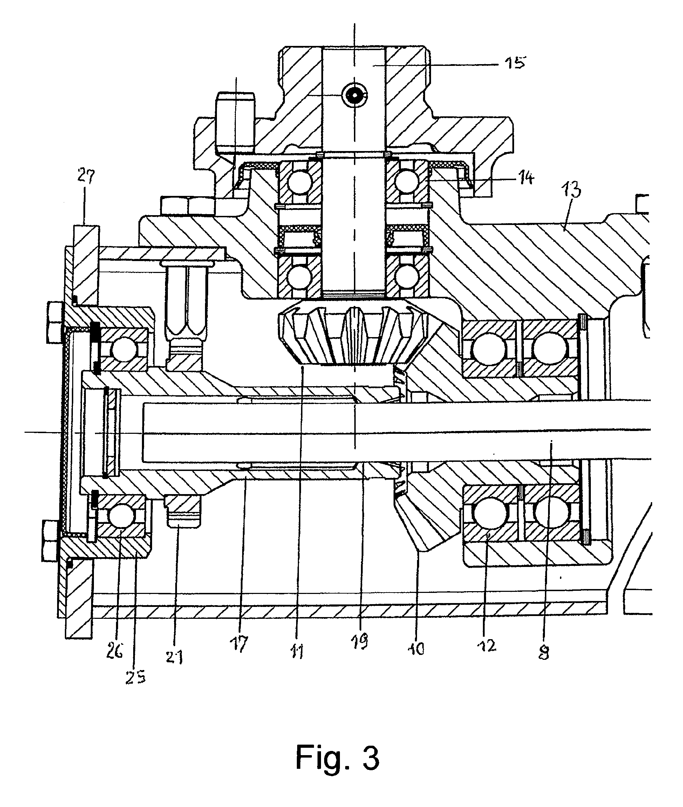

Die Inkrementalgeber 20, 21 wirken mit Impulsaufnehmern zusammen, von denen in Fig. 2 nur der antriebsseitigen Impulsaufnehmer 22 gezeigt ist. Bei der in Fig. 3 gewählten Darstellungsweise sind die abtriebsseitigen Impulsaufnehmer senkrecht zur Zeichenebene und in einer Ebene mit dem mittleren Impulsaufnehmers angeordnet. Der antriebsseitige Impulsaufnehmer sitzt in dem Getriebeflansch 5 an der Antriebsseite, die abtriebsseitigen Impulsaufnehmer sind in dem Getriebegehäuse 1 an der Abtriebsseite integriert. Der mittlere Impulsaufnehmer 21 liefert das Referenzsignal für die beiden äußeren Impulsaufnehmer. Die Torsion der Querwelle 8, die nur aus der unbeaufschlagten Verteilerscheibe resultiert, wird als Leerlaufdokument an den Rechner geliefert. Bei Beaufschlagung der Verteilerscheiben mit einem dosierten Düngermassenstrom äußert sich dies in einer stärkeren Torsion der Querwelle 8. Die dann von den Impulsaufnehmern aufgenommene Phasenverschiebung ist ein Maß für den Düngermassstrom, der auf beiden Verteilerscheiben unterschiedlich sein kann.

### Bezugszeichenliste

- 1: Gehäuserohr
- 2: Antriebsseite
- 3: Antriebswelle
- 4: Kugellager
- 5: Getriebe-Eingangsflansch
- 6: Kegelrad (Antriebsseite)
- 7: Kegelrad (Antriebeseite)
- 8: Querwelle
- 9: Kugellager
- 10: Kegelrad (Abtriebsseite)
- 11: Kegelrad (Abtriebsseite)
- 12: Kugellager
- 13: Getriebeflansch (Abtriebsseite)
- 14: Kugellager
- 15: Abtriebswelle
- 16: Übertragungshülse
- 17: Übertragungshülse
- 18: Aufnahmepunkt
- 19: Aufnahmepunkt
- 20: Inkrementalgeber
- 21: Inkremantalgeber
- 22: Impulsaufnehmer
- 23: Konsole
- 24: Kugellager
- 25: Konsole
- 26: Kugellager
- 27: Getriebegehäusedeckel

## Patentansprüche

1. Mechanisches Getriebe mit einem Antrieb (3, 4, 7) und einem Abtrieb (11,15), die über eine Welle (8) miteinander verbunden sind, und mit einer Einrichtung zur Messung des Drehmoments an der Welle (8), die jeweils drehfest mit der Welle (8) verbundene Inkrementalgeber (20, 21) und in deren Umlaufbereich ortsfest angeordnete Impulsaufnehmer (22) zur Messung des Torsionswinkels aufweist, **dadurch gekennzeichnet, dass** jeder Inkrementalgeber (20, 21) in einer mit dem Getriebegehäuse (1) fest verbundenen Konsole (23, 25) mittels einer Übertragungshülse (16, 17) gelagert ist, die an ihrem einen Ende auf der Welle (8) drehfest aufgespannt ist, die Welle (8) im Übrigen mit Luft umgibt und an ihrem anderen Ende jeweils einen Inkrementalgeber (20, 21) aufnimmt und in der mit dem Getriebegehäuse (1) fest verbundenen Konsole (23, 25) axialfest gelagert ist.

2. Getriebe nach Anspruch 1, **dadurch gekennzeichnet, dass** jeweils ein Inkrementalgeber (20) nahe dem Antrieb (3, 4, 7) und einer nahe dem Abtrieb (11, 15) auf der Welle (8) drehfest angeordnet ist.

3. Getriebe nach Anspruch 1 oder 2, **dadurch gekennzeichnet, dass** die Welle (8) gegenüber den Inkrementalgebern (20, 21) begrenzt axial und quer beweglich ist, die Inkrementalgeber jedoch (20, 21) drehfest mit ihr verbunden sind.

4. Getriebe nach einem der Ansprüche 1 bis 3, **dadurch gekennzeichnet, dass** ein Inkrementalgeber (20) auf der Welle (8) antriebsseitig und ein weiterer Inkrementalgeber (21) auf der Welle abtriebsseitig drehfest auf der Welle (8) angeordnet ist und die Inkrementalgeber (20, 21) jeweils in Konsolen (23, 25) gelagert sind, die mit dem Getriebegehäuse (1) fest verbunden sind, und dass die zugehörigen Impulsaufnehmer (22) jeweils am Getriebegehäuse (1) oder in Gehäuseflanschen (5, 13) angeordnet sind.

5. Getriebe nach einem der Ansprüche 1 bis 4, **dadurch gekennzeichnet, dass** bei einem antriebsseitigen Kegelrad-Eckgetriebe (6, 7) ein Inkrementalgeber (20) dicht am Kegelrad (7) auf der Welle (8) drehfest angeordnet ist und ein weiterer Inkrementalgeber (21) mit Abstand auf der Welle (8) drehfest angeordnet ist.

6. Getriebe nach einem der Ansprüche 1 bis 5, **dadurch gekennzeichnet, dass** bei einem antriebseitigen Kegelrad-Eckgetriebe (6, 7) und einem abtriebsseitigen Kegelrad-Eckgetriebe (10, 11) ein Inkrementalgeber (20) dicht am antriebsseitigen Kegelrad (7) und ein Inkrementalgeber (21) dicht am abtriebsseitigen Kegelrad (10) drehfest auf der Welle (8) sitzt und die zugehörigen Impulsaufnehmer (22) jeweils im Getriebegehäuse (1) oder in Bauteilen (5, 13) angeordnet sind, die mit dem Getriebegehäuse (1) verbunden sind.

7. Getriebe nach einem der Ansprüche 1 bis 6, **dadurch gekennzeichnet, dass** bei einem mittigen antriebsseitigen Kegelrad-Eckgetriebe (6, 7) und zwei an gegenüberliegenden Enden angeordneten abtriebsseitigen Kegelrad-Eckgetrieben (10, 11) mindestens ein Inkrementalgeber (20) jeweils rechts und/oder links nahe dem Kegelrad (4, 7) des Eingangsgetriebes drehfest auf der Welle (8) sitzt, und dass jeweils ein weiterer Inkrementalgeber (21) nahe dem rechten und dem linken Kegelrad (10) drehfest auf der Welle (8) sitzt.

8. Getriebe nach Anspruch 7, **dadurch gekennzeichnet, dass** mindestens ein mittlerer Inkrementalgeber (20) und ein ihm zugeordneter Impulsaufnehmer (22) das jeweilige Referenzsignal für außen liegende Impulsaufnehmer liefern.

9. Getriebe nach Anspruch 7 oder 8, **dadurch gekennzeichnet, dass** ein verschieden großer Abstand zwischen mindestens einem mittleren Inkrementalgeber (20)/Impulsaufnehmer (22) und jeweils äußeren Inkrementalgebern (21)/Impulsaufnehmern werksseitig kalibriert und/oder in einer Berechnungssoftware kompensiert wird.

10. Getriebe nach einem der Ansprüche 7 bis 9, **dadurch gekennzeichnet, dass** die Anordnung eines mittleren Impulsaufnehmers (22) in einem mittleren Getriebeflansch (5) integriert ist.

11. Getriebe nach einem der Ansprüche 7 bis 10, **dadurch gekennzeichnet, dass** die Anordnung äußerer Impulsaufnehmer jeweils in dem Getriebegehäuse (1) derselben Seite wie ein mittlerer Getriebeflansch (5) integriert ist.

12. Getriebe nach einem der Ansprüche 7 bis 10, **dadurch gekennzeichnet, dass** ein jeweils äußerer Impulsaufnehmer in Seitenflanschen (13) des Getriebegehäuses (1) integriert ist.

13. Getriebe nach einem der Ansprüche 1 bis 12, **dadurch gekennzeichnet, dass** die Übertragungshülse (16, 17) an der Aufspannfläche die Verdreh-Winkelstellung der Welle (8) aufnimmt .

14. Getriebe nach einem der Ansprüche 1 bis 13, **dadurch gekennzeichnet, dass** die Welle (8) gegenüber der Aufspannfläche der Übertragungshülse (16, 17) begrenzt axial verschieblich ist

15. Getriebe nach einem der Ansprüche 1 bis 14, **dadurch gekennzeichnet, dass** die Aufspannkraft mittels in die Übertragungshülse (16, 17) eingebrachter Schlitze aufbringbar ist.

16. Getriebe nach einem der Ansprüche 1 bis 15, **dadurch gekennzeichnet, dass** die Übertragungshülse (16, 17) aus Stahl oder Kunststoff besteht.

## Claims

1. Mechanical gear mechanism with a drive unit (3, 4, 7) and a driven unit (11, 15), which are connected to one another by way of a shaft (8), and with a device for measuring the torque at the shaft (8), which respectively has an incremental transmitter (20, 21) that is connected to the shaft (8) for rotation therewith and an impulse transducer (22) for measuring the torsion angle that is fixedly arranged in the rotating region thereof, **characterized in that** each incremental transmitter (20, 21) is mounted in a bracket (23, 25) that is fixedly connected to the gear housing (1) by means of a transmission sleeve (16, 17), which is clamped at its one end on the shaft (8) for rotation therewith, otherwise surrounds the shaft (8) with air and at its other end respectively receives an incremental transducer (20, 21), and is mounted in an axially fixed manner in the bracket (23, 25) that is fixedly connected to the gear housing (1).

2. Gear mechanism according to Claim 1, **characterized in that** an incremental transmitter (20) is respectively arranged near the drive unit (3, 4, 7) and near the driven unit (11, 15) on the shaft (8) for rotation therewith.

3. Gear mechanism according to Claim 1 or 2, **characterized in that** the shaft (8) is axially and transversely movable to a limited extent with respect to the incremental transmitters (20, 21), but the incremental transmitters (20, 21) are connected to it for rotation therewith.

4. Gear mechanism according to one of Claims 1 to 3, **characterized in that** an incremental transmitter (20) is arranged on the shaft (8) on the drive side and a further incremental transmitter (21) is arranged on the shaft on the driven side, fixed on the shaft (8) for rotation therewith, and the incremental transmitters (20, 21) are respectively mounted in brackets (23, 25), which are fixedly connected to the gear housing (1), and **in that** the associated impulse transducers (22) are respectively arranged on the gear housing (1) or in housing flanges (5, 13).

5. Gear mechanism according to one of Claims 1 to 4, **characterized in that**, in the case of a right-angle bevel gear mechanism (6, 7) on the drive side, an incremental transmitter (20) is arranged close to the bevel gear (7), fixed on the shaft (8) for rotation therewith, and a further incremental transmitter (21) is arranged at a distance, fixed on the shaft (8) for rotation therewith.

6. Gear mechanism according to one of Claims 1 to 5, **characterized in that**, in the case of a right-angle bevel gear mechanism (6, 7) on the drive side and a right-angle bevel gear mechanism (10, 11) on the driven side, an incremental transmitter (20) is located close to the bevel gear (7) on the drive side and an incremental transmitter (21) is located close to the bevel gear (10) on the driven side, fixed on the shaft (8) for rotation therewith, and the associated impulse transducers (22) are respectively arranged in the gear housing (1) or in components (5, 13) that are connected to the gear housing (1).

7. Gear mechanism according to one of Claims 1 to 6, **characterized in that**, in the case of a central right-angle bevel gear mechanism (6, 7) on the drive side and two right-angle bevel gear mechanisms (10, 11) on the driven side, arranged at opposite ends, at least one incremental transmitter (20) is respectively located to the right and/or to the left near the bevel gear (4, 7) of the input gear mechanism, fixed on the shaft (8) for rotation therewith, and **in that** a further incremental transmitter (21) is respectively located near the righthand and the left-hand bevel gear (10), fixed on the shaft (8) for rotation therewith.

8. Gear mechanism according to Claim 7, **characterized in that** at least one middle incremental transmitter (20) and an impulse transducer (22) assigned to it supply the respective reference signal for outer impulse transducers.

9. Gear mechanism according to Claim 7 or 8, **characterized in that** a distance of varying size between at least one middle incremental transmitter (20)/impulse transducer (22) and respectively outer incremental transmitters (21)/impulse transducers is calibrated at the factory and/or compensated in computational software.

10. Gear mechanism according to one of Claims 7 to 9, **characterized in that** the arrangement of a middle impulse transducer (22) is integrated in a middle gear flange (5).

11. Gear mechanism according to one of Claims 7 to 10, **characterized in that** the arrangement of outer impulse transducers is respectively integrated in the gear housing (1) of the same side as a middle gear flange (5).

12. Gear mechanism according to one of Claims 7 to 10, **characterized in that** a respectively outer impulse transducer is integrated in side flanges (13) of the gear housing (1).

13. Gear mechanism according to one of Claims 1 to 12, **characterized in that** the transmission sleeve (16, 17) picks up the torsional angular position of the shaft (8) on the clamping surface.

14. Gear mechanism according to one of Claims 1 to 13, **characterized in that** the shaft (8) is axially displaceable to a limited extent with respect to the clamping surface of the transmission sleeve (16, 17).

15. Gear mechanism according to one of Claims 1 to 14, **characterized in that** the clamping force can be applied by means of slits incorporated in the transmission sleeve (16, 17).

16. Gear mechanism according to one of Claims 1 to 15, **characterized in that** the transmission sleeve (16, 17) consists of steel or plastic.

## Revendications

1. Engrenage mécanique avec un entraînement en entrée (3, 4, 7) et un entraînement en sortie (11, 15) reliés entre eux via un arbre (8) et avec un dispositif de mesure du couple de rotation au niveau de l'arbre (8) comportant des capteurs incrémentiels (20, 21) respectivement reliés solidairement en rotation avec l'arbre (8) ainsi que des capteurs d'impulsion (22) disposés fixement sur place dans leur zone de rotation pour mesurer l'angle de torsion, **caractérisé en ce que** chaque capteur incrémentiel (20, 21) est disposé dans une console (23, 25) reliée fixement au carter d'engrenage (1) au moyen d'une douille de transmission (16, 17), ladite douille de transmission étant fixée solidairement en rotation sur l'arbre (8) au niveau de sa première extrémité, l'arbre (8) étant au demeurant entouré d'air et logeant respectivement un capteur incrémentiel (20, 21) au niveau de son autre extrémité et étant disposé fixement dans le plan axial dans la console (23, 25) reliée fixement au carter d'engrenage (1).

2. Engrenage selon la revendication 1, **caractérisé en ce que** respectivement un capteur incrémentiel (20) est disposé solidairement en rotation à proximité de l'entraînement en entrée (3, 4, 7) et qu'un autre est disposé à proximité de l'entraînement en sortie (11, 15) sur l'arbre (8).

3. Engrenage selon la revendication 1 ou 2, **caractérisé en ce que** l'arbre (8) est mobile dans le plan axial et transversal de façon limitée par rapport aux capteurs incrémentiels (20, 21), les capteurs incrémentiels (20, 21) étant toutefois reliés solidairement en rotation à lui.

4. Engrenage selon l'une quelconque des revendications 1 à 3, **caractérisé en ce qu'**un capteur incrémentiel (20) est disposé sur l'arbre (8) du côté d'entraînement en entrée et qu'un autre capteur incrémentiel (21) est disposé sur l'arbre du côté d'entraînement en sortie, solidairement en rotation sur l'arbre (8), et que les capteurs incrémentiels (20, 21) sont respectivement disposés dans les consoles (23, 25) fixement reliées au carter d'engrenage (1) et que les capteurs d'impulsion (22) associés sont respectivement disposés au niveau du carter d'engrenage (1) ou dans les brides de carter (5, 13).

5. Engrenage selon l'une quelconque des revendications 1 à 4, **caractérisé en ce qu'**en présence d'un engrenage d'angle à roue conique (6, 7) situé du côté d'entraînement en entrée, un capteur incrémentiel (20) est disposé solidairement en rotation de façon étanche sur l'arbre (8) au niveau de la roue conique (7) et qu'un capteur incrémentiel (21) supplémentaire est disposé solidairement en rotation à une certaine distance sur l'arbre (8).

6. Engrenage selon l'une quelconque des revendications 1 à 5, **caractérisé en ce qu'**en présence d'un engrenage d'angle à roue conique (6, 7) situé du côté d'entraînement en entrée et d'un engrenage d'angle à roue conique (10, 11) situé du côté d'entraînement en sortie, un capteur incrémentiel (20) repose de façon étanche contre la roue conique (7) située du côté d'entraînement en entrée et qu'un capteur incrémentiel (21) repose de façon étanche contre la roue conique (10) située du côté d'entraînement en sortie, solidairement en rotation sur l'arbre (8), et que les capteurs d'impulsion (22) reliés au carter d'engrenage (1) associés sont respectivement disposés dans le carter d'engrenage (1) ou dans les composants (5, 13).

7. Engrenage selon l'une quelconque des revendications 1 à 6, **caractérisé en ce qu'**en présence d'un engrenage d'angle à roue conique (6, 7) central situé du côté d'entraînement en entrée et de deux engrenages d'angle à roue conique (10, 11) disposés aux extrémités opposées du côté d'entraînement en sortie, au moins un capteur incrémentiel (20) repose respectivement à droite et/ou à gauche à proximité de la roue conique (4, 7) de l'engrenage d'entrée, solidairement en rotation sur l'arbre (8), et que respectivement un capteur incrémentiel (21) supplémentaire repose à proximité de la roue conique (10) droite et gauche, solidairement en rotation sur l'arbre (8).

8. Engrenage selon la revendication 7, **caractérisé en ce qu'**au moins un capteur incrémentiel (20) central et un capteur d'impulsion (22) lui étant associé fournissent le signal de référence respectif pour les capteurs d'impulsion situés à l'extérieur.

9. Engrenage selon la revendication 7 ou 8, **caractérisé en ce qu'**une distance variable entre au moins un capteur incrémentiel (20) / capteur d'impulsion (22) central et respectivement des capteurs incrémentiels (21) / capteurs d'impulsion extérieurs sont étalonnés en usine et/ou compensés dans un logiciel de calcul.

10. Engrenage selon l'une quelconque des revendications 7 à 9, **caractérisé en ce que** l'agencement d'un capteur d'impulsion (22) central est intégré dans un flasque d'engrenage (5) central.

11. Engrenage selon l'une quelconque des revendications 7 à 10, **caractérisé en ce que** l'agencement des capteurs d'impulsion extérieurs est respectivement intégré dans le carter d'engrenage (1) du même côté d'un flasque d'engrenage (5) central.

12. Engrenage selon l'une quelconque des revendications 7 à 10, **caractérisé en ce qu'**un capteur d'impulsion respectivement extérieur est intégré dans les flasques latéraux (13) du carter d'engrenage (1).

13. Engrenage selon l'une quelconque des revendications 1 à 12, **caractérisé en ce que** la douille de transmission (16, 17) reçoit la position angulaire en torsion de l'arbre (8) au niveau de la surface de serrage.

14. Engrenage selon l'une quelconque des revendications 1 à 13, **caractérisé en ce que** l'arbre (8) est mobile dans le plan axial de façon limitée par rapport à la plaque de serrage de la douille de transmission (16, 17).

15. Engrenage selon l'une quelconque des revendications 1 à 14, **caractérisé en ce que** la force de serrage peut être appliquée à l'aide de fentes amenées dans la douille de transmission (16, 17).

16. Engrenage selon l'une quelconque des revendications 1 à 15, **caractérisé en ce que** la douille de transmission (16, 17) est réalisée en acier ou en matière plastique.
